# EUROPÄISCHE PATENTSCHRIFT

(11) **EP 2 255 994 B1**
(45) Veröffentlichungstag und Bekanntmachung des Hinweises auf die Patenterteilung: **24.10.2012**
(21) Anmeldenummer: 10466014.7
(22) Anmeldetag: 20.05.2010
(51) Int. Cl.: B60N 2/46

(54) **Einstellbare Armlehne**
Adjustable arm rest
Accoudoir réglable

(30) Priorität: 21.05.2009 CZ 20090323
(43) Veröffentlichungstag der Anmeldung: 01.12.2010
(73) Patentinhaber: Skoda Auto a.s., 293 60 Mladá Boleslav (CZ)
(72) Erfinder: Sedivý, Martin, 53003 Pardubice (CZ); Horvát, Ivo, 29301 Mladá Boleslav (CZ); Benes, Vit, 46001 Liberec (CZ)

(56) Entgegenhaltungen:
- EP-A1- 0 571 333
- WO-A1-2009/006571
- DE-A1- 10 052 829
- DE-A1- 19 839 743
- DE-U1- 20 015 380
- FR-A1- 2 882 306
- US-A- 3 807 799
- US-A1- 2004 135 419
- US-A1- 2010 033 005
- US-B1- 7 255 402

## Beschreibung

### Technisches Gebiet

Die Erfindung betrifft eine verstellbare Armlehne, insbesondere bei den Sitzen der Kraftfahrzeuge.

### Blsheriger Stand der Technik

Derzeit werden im Interieur der Kraftfahrzeuge Armlehnen verwendet, welche den Reisekomfort der Fahrzeugbesatzung steigern. Sie sind sowohl bei Hintersitzen, wie auch bei Vordersitzen bzw. zwischen den Sitzen eingebaut. Die zwischen den Vordersitzen angeordneten Armlehnen sind Bestandteil der Mittelkonsole und können einerseits für eine Schubbewegung in der Richtung der Fahrzeuglängsachse und anderseits für eine Schwenkbewegung ausgebildet sein, falls aus beliebigem Grund ein Raum zwischen den Vordersitzen notwendig wird. Um auch den individuellen Wünschen der Besatzung an Vordersitzen entgegenzukommen, insbesondere des Fahrers, sind so schwenkbare Lehnen mit verschiedenen Mechanismen ausgestattet, welche ihre Arretierung in geforderter Stellung ermöglichen. Zur Arretierung werden verschiedene Arten von Mechanismen verwendet, welche eine feste, konstante Stellung des Schwenkgliedes gegenüber dem festen Grundkörper sichern. Insbesondere werden Sperrradmechanismen verwendet, wo das verzahnte Sperrrad in ein verzahntes Segment einrastet. Aus der gattungsbildenden DE 10052829 ist eine Arretiervorrichtung für eine Armlehne in einem Kfz bekannt, die zur Arretierung eines beweglichen Koerpers bzw. einer Armlehne, insbesondere bei grossen Beschleunigungen, zum Beispiel im Falle eines Unfalls, mit einem ausfahrbaren Riegelbolzen, der über eine Kulissensteuerung von einem durch Traegheitskraefte verlagerbaren Massenkoerper, steuerbar ist. Der Nachteil ist die relativ erhebliche Kompliziertheit sowie der entsprechende Preisaufwand.

### Darstellung der Erfindung

Die angeführten Nachteile werden durch eine verstellbare Armlehne gelöst, die aus einem Träger mit Ösen besteht, in denen ein Zentralrohr mit einer, auf dem Zentralrohr angeordneten Spiralfeder fest gelagert ist, wobei auf dem Zentralrohr ein Schwenkarm angeordnet ist, wobei die verstellbare Armlehne aus einem Paar mit einer Konsole und einem mit einem Führungsglied verschenen fragrahmen verbundenen Tragrohrgliedem und weiter aus einem Steuermechanismus besteht. Die Erfindung ist dadurch gekennzeichnet, dass die Spiralfeder zwischen dem Zentralrohr und mindestens einem Tragrohrglied angeordnet ist, wobei ein Ende der Spiralfeder mit dem Schwenkarm verbunden und das zweite Ende der Spiralfeder im Eingriff mit dem Steuermechanismus ist. Weiterbildungen der Erfindung sind in den abhängigen Anspruchen angegeben Im Tragrohrglied ist mindestens eine Mitnahmenut ausgebildet. Das Steuerglied umfasst eine im Längsgehäuse gelagerte Welle, wo ein Teil eines Wellenendes in einer Buchse mit Ansatz gelagert ist, mit dem die Buchse schwenkbar in der Konsole gelagert ist. Die Buchse mit Ansatz ist mit einem Nocken ausgebildet. Das Längsgehäuse umfasst ein Schraubglied, das in der Öffnung mit einem Innengewinde gleicher Steigung gelagert ist. Diese Öffnung ist in der Betätigungstaste ausgebildet, die verschiebbar in dem Führungsglied gelagert ist.

### Übersicht der Figuren der Zeichnungen

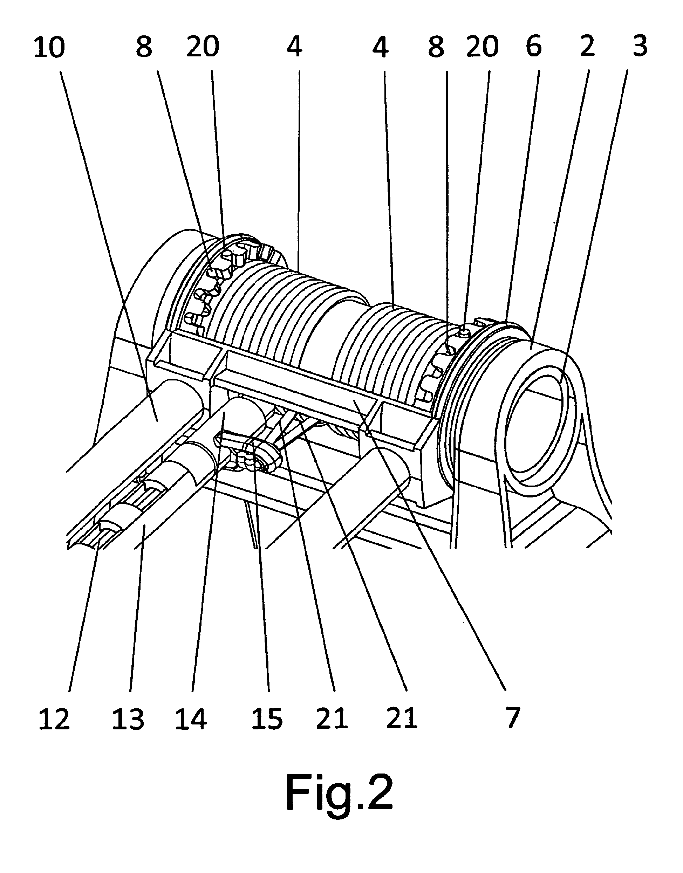

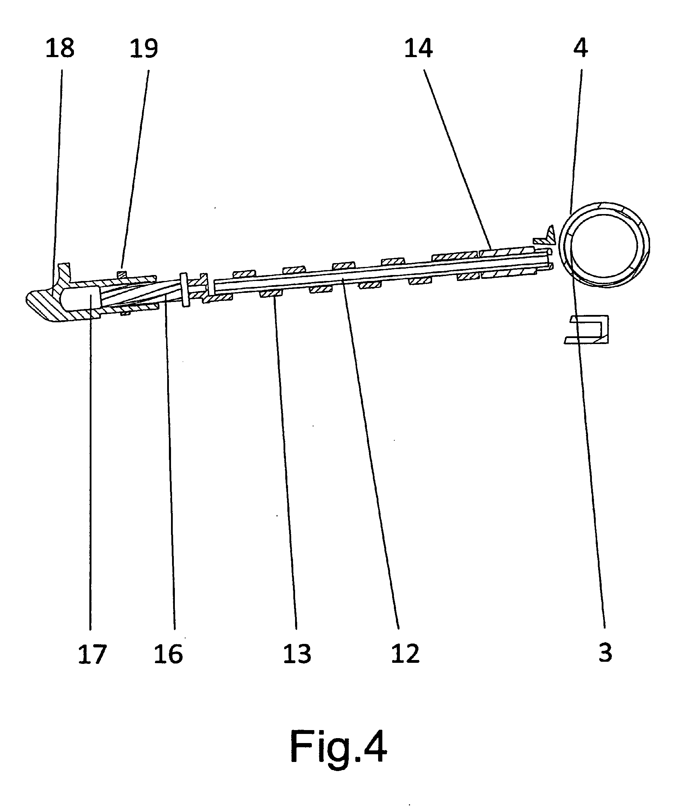

Die Erfindung wird näher anhand der Ausführungsbeispiele gemäß den beigefügten Zeichnungen erläutert, in denen die Fig. 1 eine Axonometrieansicht auf die verstellbare Armlehne, Fig. 2 eine Axonometrieansicht auf die verstellbare Armlehne im Detail, Fig. 3 den Längsschnitt des Zentralrohres, Fig. 4 den Längsschnitt des Steuermechanismus und Fig. 5 den Querschnitt der Buchse mit dem Nocken darstellt.

### Ausführungsbeispiel der Erfindung

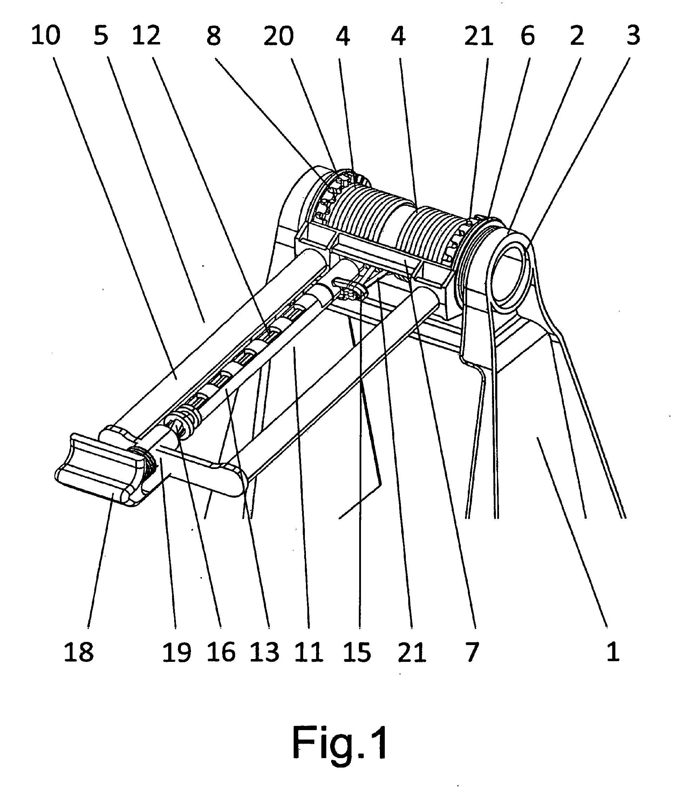

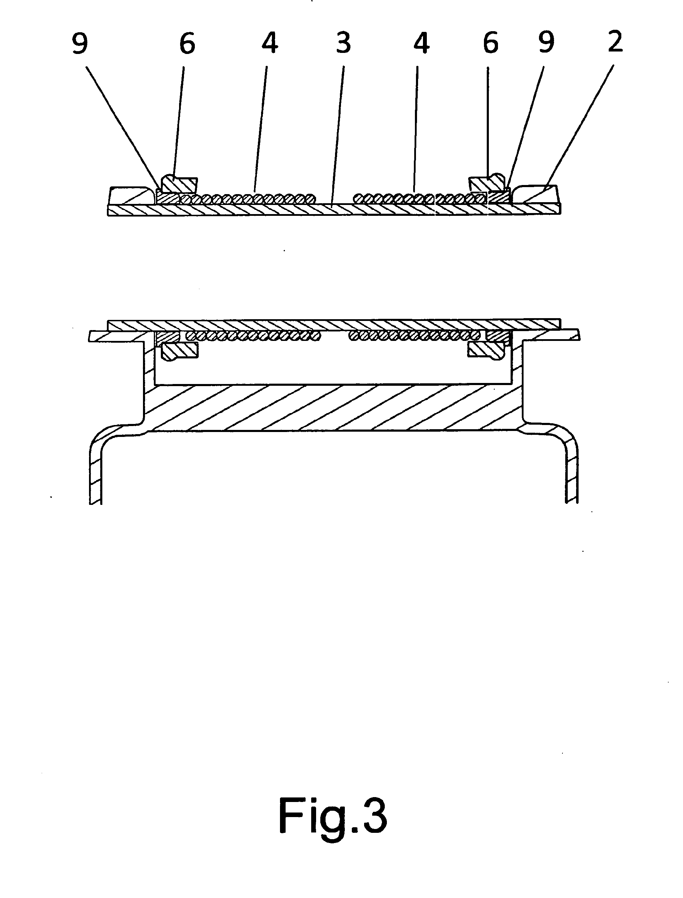

Wie aus der Fig. 1 hervorgeht, umfasst die verstellbare Armlehne einen Träger 1, welcher die Ösen 2 aufweist. In den Ösen ist ein Zentralrohr 3 gelagert, das in den Ösen 2 mit Stiften gegen das Verschwenken gesichert ist (nicht abgebildet). Auf diesem Zentralrohr 3 ist ein Paar der Spiralfeder 4 aufgesetzt. Weiter ist am Zentralrohr 3 ein aus zwei mit der Konsole 7 verbundenen Tragrohrelementen 6 bestehender Schwenkarm 5 angeordnet. Die Tragrohrelemente 6 umfassen mindestens eine Mitnahmenut 8, wobei vorteilhaft diese Mitnahmenuten 8 entlang des ganzen Umfangs ausgebildet sind. Die Tragrohrglieder 6 sind an dem Zentralrohr 3 mittels Gleitglieder 9 gelagert, wie aus der Fig. 3 hervorgeht. An der Konsole 7 ist ein Tragrahmen 10 befestigt, an dem die eigentliche Polsterung der Armlehne angeordnet ist (nicht abgebildet). Der Tragrahmen 10 umfasst weiter ein Steuermechanismus 11, bestehend aus einer im Längsgehäuse 13 verschiebbar gelagerten Welle 12, wo ein Teil des Wellenendes 12 in der Buchse mit Ansatz 14 fest gelagert ist, mit der es schwenkbar in der Konsole 7 gelagert ist. An der Buchse mit Ansatz 14 ist ein Nocken 15 ausgebildet. Das Längsgehäuse 13 umfasst ein Schraubglied 16, das in der Öffnung mit einem Innengewinde 17 gleicher Steigung gelagert ist. Diese Öffnung mit dem Innengewinde 17 ist in der Betätigungstaste 18 ausgebildet, die verschiebbar in dem Führungsglied 19 gelagert ist. Die Spiralfeder 4 haben ein Spiralfederende 20, das in der Mitnahmenut 8 der Tragrohrglieder 6 gelagert ist, und ein zweites Spiralfederende 21, das im Eingriff mit dem Nocken 15 ist.

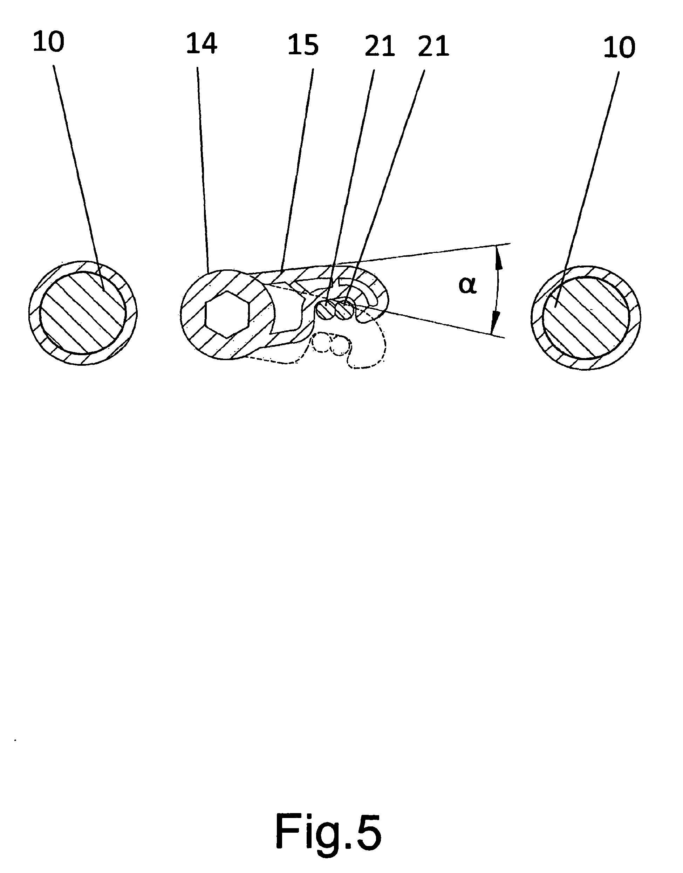

Die eigentliche Handhabung der verstellbaren Armlehne ist nach dem Andruck der Betätigungstaste 18 möglich, wobei die Schubbewegung mittels der Interaktion des Innengewinde in der Öffnung mit Innengewinde 17 der Betätigungstaste 18 und des Schraubgliedes 16 in eine Schwenkbewegung im Uhrzeigersinn überleitet wird, wonach zum Verschwenken des Längsgehäuses 13 und dadurch auch der Welle 12 und der Buchse mit Ansatz 14 kommt, auf der ein Nocken 15 ausgebildet ist, wie gestrichen in der Fig. 5 dargestellt wird. Über den Nocken 15 wird die Schwenkbewegung auf die zweiten Spiralfederenden 21 übertragen, diese werden um Winkel α verschwenkt, wodurch der Schwenkarm 5 gelöst wird, da sich die Berührungsfläche zwischen den Spiralfedern 4 und dem Zentralrohr 3 verringert und folglich auch der Reibungswiderstand kleiner wird. Die Winkelgröße α ergibt sich aus den geometrischen und Materialverhältnissen der Spiralfeder 4 und der Zentralröhre 3. Der Reibungswiderstand ergibt sich aus der Berührungsfläche der Spiralfeder 4 und des Zentralrohrs 3, aus deren Durchmesser und dem Material der Berührungsflächen. Für eine optimale Vorspannkraft der Spiralfeder 4 wird die entsprechende Mitnahmenut 8 des Tragrohrgliedes 6 verwendet.

Nach Lösung des Schwenkarmes 5 wird dieser in die geforderte Stellung eingestellt. Danach wird die Betätigungstaste 18 gelöst, sodass das Steuermechanismus 11 sowie die Spiralfeder 4 in die Ausgangsstellung zurückkehren, das Zentralrohr 3 wird mit den Spiralfedern 4 eingeklemmt und der Schwenkarm 5 in der geforderten Stellung arretiert.

Die verschiebbare Lagerung der Welle 12 im Längsgehäuse 13 ermöglicht eine Achsdehnung beider Teile bei gleichzeitiger Beibehaltung derer Schwenkbewegung. Dies wird in dem Fall genutzt, wenn der Schwenkarm 5 auch in der Längsrichtung des Fahrzeuges verschiebbar ist.

### Bezugszeichenliste

- 1: Träger
- 2: Öse
- 3: Zentralrohr
- 4: Spiralfeder
- 5: Schwenkarm
- 6: Tragrohrglied
- 7: Konsole
- 8: Mitnahmenut
- 9: Gleitglied
- 10: Tragrahmen
- 11: Steuermechanismus
- 12: Welle
- 13: Längsgehäuse
- 14: Buchse mit Ansatz
- 15: Nocken
- 16: Schraubglied
- 17: Öffnung mit Innengewinde
- 18: Betätigungstaste
- 19: Führungsglied
- 20: Erstes Ende der Spiralfeder
- 21: Zweites Ende der Spiralfeder

## Patentansprüche

1. Verstellbare Armlehne bestehend aus einem Träger (1) mit Ösen (2), in denen ein Zentralrohr (3) mit einer auf dem Zentralrohr (3) angeordneten Spiralfeder (4) fest gelagert ist, wobei auf dem Zentralrohr (3) weiter ein Schwenkarm (5) angeordnet ist, wobei die verstellbare Armlehne aus einem Paar mit einer Konsole (7) und einem mit einem Führungsglied (19) versehenen Tragrahmen (10) verbundenen Tragrohrgliedem (6) und weiter aus einem Steuermechanismus (11) besteht, **dadurch gekennzeichnet, dass** die Spiralfeder (4) zwischen dem Zentralrohr (3) und mindestens einem Tragrohrglied (6) angeordnet ist, wobei ein Ende (20) der Spiralfeder (4) mit dem Schwenkarm (5) verbunden und das zweite Ende (21) der Spiralfeder (4) im Eingriff mit dem Steuermechanismus (11) ist.

2. Verstellbare Armlehne nach Anspruch 1 **dadurch gekennzeichnet, dass** in dem Tragrohrglied (6) mindestens eine Mitnahmenut (8) ausgebildet ist.

3. Verstellbare Armlehne nach Anspruch 1 **dadurch gekennzeichnet, dass** das Steuermechanismus (11) eine in dem Führungsgebied (19) verschiebbar gelagerte Betätigungstaste (18) und eine im Längsgehäuse (13) gelagerte Welle (12) umfasst, wo ein Teil des Wellenendes (12) in der Buchse mit Ansatz (14) gelagert ist, mit der die Buchse mit Ansatz (14) schwenkbar in der Konsole (7) gelagert ist.

4. Verstellbare Armlehne nach Anspruch 3 **dadurch gekennzeichnet, dass** die Buchse mit Ansatz (14) einen Nocken (15) aufweist.

5. Verstellbare Armlehne nach Anspruch 3 **dadurch gekennzeichnet, dass** das Längsgehäuse (13) ein Schraubglied (16) umfasst, das in der Öffnung mit Innengewinde (17) gleicher Steigung gelagert ist, die in der Betätigungstaste (18) ausgebildet ist.

## Claims

1. Adjustable armrest consisting of a support (1) with eyes (2), in which a central tube (3) having a spiral spring (4) arranged on the central tube (3) is fixedly mounted, wherein a pivoting arm (5) is furthermore arranged on the central tube (3), wherein the adjustable armrest consists of a pair of supporting tube members (6) connected to a bracket (7) and to a supporting rail (10), which is provided with a guide member (19), and furthermore consists of a control mechanism (11), **characterized in that** the spiral spring (4) is arranged between the central tube (3) and at least one supporting tube member (6), wherein one end (20) of the spiral spring (4) is connected to the pivoting arm (5) and the second end (21) of the spiral spring (4) is in engagement with the control mechanism (11).

2. Adjustable armrest according to Claim 1, **characterized in that** at least one carry-along groove (8) is formed in the supporting tube member (6).

3. Adjustable armrest according to Claim 1, **characterized in that** the control mechanism (11) comprises an actuating button (18) mounted displaceably in the guide member (19), and a shaft (12) mounted in the longitudinal housing (13), where a part of the shaft end (12) is mounted in the bushing with an extension (14), with which the bushing is mounted pivotably by means of the extension (14) in the bracket (7).

4. Adjustable armrest according to Claim 3, **characterized in that** the bushing together with the extension (14) comprises a cam (15).

5. Adjustable armrest according to Claim 3, **characterized in that** the longitudinal housing (13) comprises a screwing member (16) which is mounted in the opening by means of an internal thread (17) of identical pitch, which internal thread is formed in the actuating button (18).

## Revendications

1. Accoudoir réglable constitué d'un support (1) doté d'oeillets (2) dans lesquels est monté fixement un tube central (3) doté d'un ressort spiral (4) disposé sur le tube central (3), un bras pivotant (5) étant en outre disposé sur le tube central (3), l'accoudoir réglable étant constitué d'une paire d'organes de tube-support (6) reliés à une console (7) et à un cadre.de support (10) pourvu d'un organe de guidage (19) et en outre d'un mécanisme de commande (11), **caractérisé en ce que** le ressort spiral (4) est disposé entre le tube central (3) et au moins un organe de tube-support (6), une extrémité (20) du ressort spiral (4) étant reliée au bras pivotant (5) et la deuxième extrémité (21) du ressort spiral (4) étant en prise avec le mécanisme de commande (11).

2. Accoudoir réglable selon la revendication 1, **caractérisé en ce qu'**au moins une rainure d'entraînement (8) est réalisée dans l'organe de tube-support (6).

3. Accoudoir réglable selon la revendication 1, **caractérisé en ce que** le mécanisme de commande (11) comporte une touche d'actionnement (18) montée coulissante dans l'organe de guidage (19) et un arbre (12) monté dans le boîtier longitudinal (13), une partie de l'extrémité de l'arbre (12) étant montée dans la douille dotée d'une rallonge (14), à l'aide duquel arbre la douille dotée d'une rallonge (14) est montée pivotante dans la console (7).

4. Accoudoir réglable selon la revendication 3, **caractérisé en ce que** la douille dotée d'une rallonge (14) comprend une came (15).

5. Accoudoir réglable selon la revendication 3, **caractérisé en ce que** le boîtier longitudinal (13) comporte un organe fileté (16) qui est monté dans l'ouverture munie d'un filetage intérieur (17) de même pas qui est réalisée dans la touche d'actionnement (18).
